(19) **Europäisches Patentamt / European Patent Office / Office européen des brevets**

(11) **EP 4 668 215 A1**

(12) # EUROPEAN PATENT APPLICATION
published in accordance with Art. 153(4) EPC

(43) Date of publication:
**24.12.2025  Bulletin 2025/52**

(21) Application number: **23922110.4**

(22) Date of filing: **24.03.2023**

(51) International Patent Classification (IPC):
**G06T 13/20** (2011.01)    **G10L 25/57** (2013.01)
**G06T 13/40** (2011.01)    **G06T 3/40** (2024.01)

(52) Cooperative Patent Classification (CPC):
Y02T 10/40

(86) International application number:
**PCT/CN2023/083559**

(87) International publication number:
**WO 2024/168981 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.02.2023  CN 202310135294**

(71) Applicant: **Unidt (Shanghai) Co., Ltd.
Shanghai 200040 (CN)**

(72) Inventor: **SHEN, Xuli
Shanghai 200040 (CN)**

(74) Representative: **Cabinet Le Guen Maillet
3, impasse de la Vigie
CS 71840
35418 Saint-Malo Cedex (FR)**

(54) **DIGITAL HUMAN GENERATION METHOD AND APPARATUS, COMPUTER-READABLE STORAGE MEDIUM, AND TERMINAL**

(57)    A digital human generation method and apparatus, a computer-readable storage medium, and a terminal, the method comprising: determining input speech and target emotion information (S11); encoding the input speech to obtain a speech encoding matrix, and encoding the target emotion information to obtain an emotion encoding matrix (S12); fusing the speech encoding matrix and the emotion encoding matrix to obtain a fusion matrix (S13); and inputting the fusion matrix into a digital human generation model to obtain a digital human image corresponding to the input speech (S14). By using the foregoing solution, a digital human with emotion can be generated, and emotion editability of the digital human is achieved.

S11 — input speech and target emotion information are determined

S12 — the input speech is encoded to obtain a speech code matrix, and the target emotion information is encoded to obtain an emotion code matrix

S13 — the speech code matrix and the emotion code matrix are fused to obtain a fusion matrix

S14 — the fusion matrix is input into a digital human generation model to obtain a digital human image corresponding to the input speech

**FIG. 1**

**Description**

CROSS-REFERENCE TO RELATED APPLICATIONS

This application claims priority to Chinese Patent Application No. 202310135294.8, filed on February 17, 2023, and entitled "DIGITAL HUMAN GENERATION METHOD AND APPARATUS, COMPUTER READABLE STORAGE MEDIUM, AND TERMINAL", the entire disclosure of which is incorporated herein by reference.

TECHNICAL FIELD

The present disclosure generally relates to computer technology field, and more particularly, to a digital human generation method and apparatus, a computer readable storage medium, and a terminal.

BACKGROUND

The task of digital human generation is to generate a digital human video with a speaker as a visual center based on a given speech or text. The digital human has a specific image and can be applied in various fields, such as news broadcasting, tourist attraction introduction, or product and service introduction.

There are many digital human generation methods at present, such as those based on Generative Adversarial Network (GAN) or Neural Radiance Fields (NeRF) theory. These methods aim to generate digital humans with high quality and aligned mouth shape and voice, however, they cannot generate digital humans with emotions.

In practical scenarios, digital humans that can only express in voice can no longer meet user's interactive needs. Taking an application scenario of product service introduction as an example, it is expected that the generated digital human can not only correctly answer user's questions, but also show an expression state that meets the needs of the scenario. For example, based on a given target emotion or perceived user's emotion, a digital human that empathizes with the user can be generated accordingly, so that the generated digital human can better convey emotions and enhance user experience. Such emotionally editable digital human generation solutions are in large demand in fields such as medical rehabilitation, autonomous driving, or housekeeping services. However, in current digital human generation technology, there is still a lack of effective solutions for editing the emotions of digital humans.

SUMMARY

Embodiments of the present disclosure aim to generate a digital human with emotions and make the emotions of the digital human editable.

In an embodiment of the present disclosure, a digital human generation method is provided, including: determining input speech and target emotion information; encoding the input speech to obtain a speech code matrix, and encoding the target emotion information to obtain an emotion code matrix; fusing the speech code matrix and the emotion code matrix to obtain a fusion matrix; and inputting the fusion matrix into a digital human generation model to obtain a digital human image corresponding to the input speech.

Optionally, the target emotion information is preset, or is determined based on the input speech and an emotion prediction model.

Optionally, following obtaining the digital human image corresponding to the input speech, the method further includes: training the digital human generation model using the digital human image corresponding to the input speech, an original image corresponding to the input speech, and a preset loss function to obtain an optimized digital human generation model; and inputting the fusion matrix into the optimized digital human generation model to obtain an optimized digital human image corresponding to the input speech.

Optionally, an emotion type indicated by the target emotion information is consistent with an emotion type contained in the input speech.

Optionally, the preset loss function is:

$$L = \sum_{a=1}^{A} \sum_{b=1}^{B} \sum_{ch=1}^{3} P I_{g,ch}(a,b) - I_{ch}(a,b) P ,$$

where $L$ is the loss function, $A$ is a number of pixels of the digital human image or the original image in a first direction, $B$ is a number of pixels of the digital human image or the original image in a second direction, $(a,b)$ is an intersectional pixel of the a-th row in the first direction and the b-th column in the second direction in the digital human image or the original image, $ch$ is a color channel of pixels, $I_{g,ch}(a, b)$ is a pixel value of an intersection of the a-th row in the first direction and the b-th column in the second direction in the original image on the channel *ch,* and $I_{ch}(a,b)$ is a pixel value of an intersection of the a-th row in the first direction and the b-th column in the second direction in the digital human image on the channel *ch.*

Optionally, following obtaining the optimized digital human image corresponding to the input speech, the method further includes: splicing optimized digital human images corresponding to a plurality of input speeches together to obtain a digital human generation video.

Optionally, said encoding the target emotion information to obtain the emotion code matrix includes: pre-coding the target emotion information based on a preset emotion code length to obtain a plurality of groups of emotion sub-codes, where each of the plurality of groups of emotion sub-codes includes two identical emotion sub-codes; for each of the plurality of groups of emotion sub-codes, determining a sine value of one emotion sub-code in the group and a cosine value of the other emotion sub-code in the group, to determine a plurality of emotion codes corresponding to the emotion sub-codes in the plurality of groups; and determining the emotion code matrix based on the plurality of emotion codes.

Optionally, said for each of the plurality of groups of emotion sub-codes, determining the sine value of one emotion sub-code in the group and the cosine value of the other emotion sub-code in the group, to determine the plurality of emotion codes corresponding to the emotion sub-codes in the plurality of groups, and determining the emotion code matrix based on the plurality of emotion codes are implemented based on a following formula:

$$P = \left[ \sin\left(2^0 \pi E\right), \cos\left(2^0 \pi E\right), \sin\left(2^1 \pi E\right), \cos\left(2^1 \pi E\right) \ldots, \sin\left(2^{L-1} \pi E\right), \cos\left(2^{L-1} \pi E\right) \right],$$

where *P* is the emotion code matrix, *E* is the target emotion information, *L* is a number of the plurality groups of emotion sub-codes obtained by pre-coding, $2^{L-1}\pi E$ is an emotion sub-code in the L-th group of emotion sub-codes, $\sin(2^{L-1}\pi E)$ is the sine value of one emotion sub-code in the L-th group of emotion sub-codes, $\cos(2^{L-1}\pi E)$ is the cosine value of the other emotion sub-code in the L-th group of emotion sub-codes, and [x] is a matrix composed of x.

Optionally, said fusing the speech code matrix and the emotion code matrix to obtain the fusion matrix includes: splicing each emotion code in the emotion code matrix to a preset position of each row of speech code in the speech code matrix to obtain the fusion matrix, where a time dimension of the speech code matrix remains unchanged.

Optionally, said splicing each emotion code in the emotion code matrix to a preset position of each row of speech code in the speech code matrix to obtain the fusion matrix is implemented based on a following formula:

$$P \in R^{2L},$$

$$v \in R^{t \times s},$$

$$\tilde{v} \in R^{t \times (s+2L)},$$

where *P* is the emotion code matrix, *v* is the speech code matrix, v% is the fusion matrix, *t* is a number of rows of the speech code matrix, i.e., a time dimension of the speech code matrix, *s* is a length of each row of speech code in the speech code matrix, and 2*L* is an emotion code length.

Optionally, the digital human generation model is selected from a group consisting of: models based on GAN, and models based on NeRF.

In an embodiment of the present disclosure, a digital human generation apparatus is provided, including: an input information determination circuitry configured to determine input speech and target emotion information; an encoding circuitry configured to encode the input speech to obtain a speech code matrix, and encode the target emotion information to obtain an emotion code matrix; a fusing circuitry configured to fuse the speech code matrix and the emotion code matrix to obtain a fusion matrix; and a digital human generation circuitry configured to input the fusion matrix into a digital human generation model to obtain a digital human image corresponding to the input speech.

In an embodiment of the present disclosure, a computer readable storage medium having a computer program stored therein is provided, where when the computer program is executed by a processor, any one of the above methods is implemented.

In an embodiment of the present disclosure, a terminal including a memory and a processor is provided, where the memory has a computer program stored therein, and when the processor executes the computer program, any one of the above methods is implemented.

Embodiments of the present disclosure may provide following advantages.

In the embodiments of the present disclosure, a digital human generation method is provided. Input speech and target emotion information are determined. The input speech is encoded to obtain a speech code matrix, and the target emotion information is encoded to obtain an emotion code matrix. The speech code matrix and the emotion code matrix are fused to obtain a fusion matrix. The fusion matrix is input into a digital human generation model to obtain a digital human image corresponding to the input speech. In the embodiments, the input speech and the target emotion information are fused by a matrix fusion method to obtain the fusion matrix. Then the fusion matrix is input into the digital human generation model, so that the generated digital human can not only complete speech expression, but also show an expression state that meets the indication of the target emotion information, that is, generate a digital human with emotions. Further, as the target emotion information can be set according to needs of scenarios, different target emotion information may be set in different application scenarios, thereby realizing editability of emotions of the digital human.

Further, the target emotion information may be preset. For example, a user may pre-set the target emotion information according to personal needs or expectations, thereby enabling the generated digital human to have the desired emotion/expression state. Alternatively, the target emotion information may be determined based on the input speech and the emotion prediction model, thereby enabling the generated digital human's emotion to be consistent with a speaker's emotion contained in the input speech, thereby generating a digital human with empathy and improving user experience.

Further, following obtaining the digital human image corresponding to the input speech, the method further includes: training the digital human generation model using the digital human image corresponding to the input speech, an original image corresponding to the input speech, and a preset loss function to obtain an optimized digital human generation model; and inputting the fusion matrix into the optimized digital human generation model to obtain an optimized digital human image corresponding to the input speech. By constructing a training data set using the digital human image corresponding to the input speech and the original image (for example, a facial image of the user acquired when the user outputs the input speech), the digital human generation model is optimized, so that the digital human generation model can learn user's real emotions contained in the original image. Therefore, after inputting the fusion matrix into the optimized digital human generation model, a digital human that is more in line with the user's real emotion state is obtained, thereby improving empathy of the digital human.

Further, said encoding the target emotion information to obtain the emotion code matrix includes: pre-coding the target emotion information based on a preset emotion code length to obtain a plurality of groups of emotion sub-codes, where each of the plurality of groups of emotion sub-codes includes two identical emotion sub-codes; for each of the plurality of groups of emotion sub-codes, determining a sine value of one emotion sub-code in the group and a cosine value of the other emotion sub-code in the group, to determine a plurality of emotion codes corresponding to the emotion sub-codes in the plurality of groups; and determining the emotion code matrix based on the plurality of emotion codes. In the embodiments of the present disclosure, by encoding the target emotion information to vectorize or matricize the target emotion information, compared with using a single scalar defined target emotion information as input, an input dimension of the target emotion information is improved, which helps the generated digital human to more accurately express the emotion state indicated by the target emotion information.

Further, said fusing the speech code matrix and the emotion code matrix to obtain the fusion matrix includes: splicing each emotion code in the emotion code matrix to a preset position of each row of speech code in the speech code matrix to obtain the fusion matrix, where a time dimension of the speech code matrix remains unchanged. By adopting the above splicing method to perform matrix fusion, the fusion matrix includes speech codes in the speech code matrix and emotion codes in the emotion code matrix. In this manner, the generated digital human can not only accurately express speech characteristics of the input speech, but also accurately express emotion characteristics of the target emotion.

BRIEF DESCRIPTION OF THE DRAWINGS

FIG. 1 is a flow chart of a digital human generation method according to an embodiment;

FIG. 2 is a partial flow chart of a digital human generation method according to an embodiment; and

FIG. 3 is a block diagram of a digital human generation apparatus according to an embodiment.

DETAILED DESCRIPTION

As mentioned in the background, there are many digital human generation methods at present, such as those based on GAN or NeRF theory. These methods aim to generate digital humans with high quality and aligned mouth shape and voice, however, they cannot generate digital humans with emotions.

In practical scenarios, digital humans that can only express in voice can no longer meet user's interactive needs. Taking the application scenario of product service introduction as an example, it is expected that the generated digital human can not only correctly answer user's questions, but also show an expression state that meets the needs of the scenario. For example, based on a given target emotion or perceived user's emotion, a digital human that empathizes with the user can be generated accordingly, so that the generated digital human can better convey emotions and enhance user experience. Such emotionally editable digital human generation solutions are in large demand in the fields such as medical rehabilitation, autonomous driving, or housekeeping services. However, in current digital human generation technology, there is still a lack of effective solutions for editing the emotions of digital humans.

In the embodiments of the present disclosure, a digital human generation method is provided, including: determining input speech and target emotion information; encoding the input speech to obtain a speech code matrix, and encoding the target emotion information to obtain an emotion code matrix; fusing the speech code matrix and the emotion code matrix to obtain a fusion matrix; and inputting the fusion matrix into a digital human generation model to obtain a digital human image corresponding to the input speech.

In the embodiments, the input speech and the target emotion information are fused by a matrix fusion method to obtain the fusion matrix. Then the fusion matrix is input into the digital human generation model, so that the generated digital human can not only complete speech expression, but also show an expression state that meets the indication of the target emotion information, that is, generate a digital human with emotions. Further, as the target emotion information can be set according to needs of scenarios, different target emotion information may be set in different application scenarios, thereby realizing editability of emotions of the digital human.

In order to clarify the objects, characteristics and advantages of the disclosure, embodiments of present disclosure will be described in detail in conjunction with accompanying drawings.

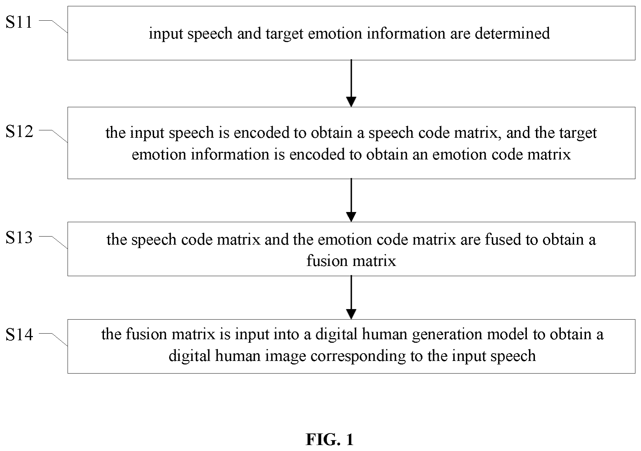

Referring to FIG. 1, FIG. 1 is a flow chart of a digital human generation method according to an embodiment. The method may be applied to a terminal with functions of data processing and digital human generation. The terminal may include but is not limited to a mobile phone, a computer, a tablet computer, a smart wearable device (e.g., a smart watch), or a vehicle-mounted terminal device, and may alternatively be a server or a cloud platform.

The method may include S11 to S14.

In S11, input speech and target emotion information are determined.

In S12, the input speech is encoded to obtain a speech code matrix, and the target emotion information is encoded to obtain an emotion code matrix.

In S13, the speech code matrix and the emotion code matrix are fused to obtain a fusion matrix.

In S14, the fusion matrix is input into a digital human generation model to obtain a digital human image corresponding to the input speech.

In some embodiments of S11, the input speech may be a recorded speech from expression by a speaker on site, or a speech selected from a historically collected speech database. Each speech has its own content and duration, and includes corresponding speaker/expresser's emotions.

The speaker of the input speech may include but is not limited to: a driver driving a vehicle, a person doing housework, a child playing a game, a sick patient in hospital, an elderly person living alone, or the like.

Emotions indicated by the target emotion information may include but is not limited to: happiness, sadness, fatigue, worry, surprise, or the like.

In some embodiments, the target emotion information may be defined by using a scalar E. For example, the emotion "happiness" is assigned a value of 1, the emotion "sadness" is assigned a value of 2, the emotion "fatigue" is assigned a value of 3, and so on.

In some embodiments, the target emotion information may be preset. Specifically, the emotion indicated by the preset target emotion information may be, for example, the emotion that the user wishes to generate for the digital human. Therefore, the target emotion information may be preset to meet needs of actual scenarios, so as to conveniently and flexibly realize the editability of the emotions of the digital human.

In some embodiments, the target emotion information may be determined based on the input speech and the emotion prediction model. Specifically, the input speech may be input into the emotion prediction model (or an emotion perception model) so that the model predicts the emotion contained in the input speech (specifically, the real emotion of the speaker of the input speech when expressing the input speech). Therefore, the emotion of the generated digital human may be consistent with the real emotion of the speaker contained in the input speech, and the generated digital human may empathize with the speaker, thereby improving user experience.

In some embodiments of S 12, encoding the input speech may be a process of encoding an analog speech signal to convert the analog signal into a digital signal. Specifically, the speech code matrix may be determined by using a speech coding model. For example, following steps may be included. The input speech is input into the speech coding model; and output of the speech coding model is taken as the speech code matrix corresponding to the input speech. The speech coding model may be any existing model that can realize a speech coding function.

Encoding the target emotion information may be a process of converting the target emotion information defined by a single scalar into an emotion code matrix (or an emotion code vector), where each element in the emotion code matrix represents an emotion code.

Further, said encoding the target emotion information to obtain the emotion code matrix in S12 includes: pre-coding the target emotion information based on a preset emotion code length to obtain a plurality of groups of emotion sub-codes, where each of the plurality of groups of emotion sub-codes includes two identical emotion sub-codes; for each of the plurality of groups of emotion sub-codes, determining a sine value of one emotion sub-code in the group and a cosine value of the other emotion sub-code in the group, to determine a plurality of emotion codes corresponding to the emotion sub-codes in the plurality of groups; and determining the emotion code matrix based on the plurality of emotion codes.

In some embodiments, the emotion code matrix may be a one-dimensional matrix, that is, a number of rows of the emotion code matrix may be 1, and the emotion code matrix with one row may also be called an emotion code vector. The emotion code length may be used to indicate a number of emotion codes contained in each row of the emotion code matrix or a number of emotion codes contained in the emotion code vector.

Further, said for each of the plurality of groups of emotion sub-codes, determining the sine value of one emotion sub-code in the group and the cosine value of the other emotion sub-code in the group, to determine the plurality of emotion codes corresponding to the emotion sub-codes in the plurality of groups, and determining the emotion code matrix based on the plurality of emotion codes are implemented based on a following formula:

$$P = \left[ \sin\left(2^0 \pi E\right), \cos\left(2^0 \pi E\right), \sin\left(2^1 \pi E\right), \cos\left(2^1 \pi E\right) \ldots, \sin\left(2^{L-1} \pi E\right), \cos\left(2^{L-1} \pi E\right) \right],$$

where $P$ is the emotion code matrix, $E$ is the target emotion information, $L$ is a number of the plurality groups of emotion sub-codes obtained by pre-coding, $(2^{L-1}\pi E$ is an emotion sub-code in the L-th group of emotion sub-codes, $\sin(2^{L-1}\pi E)$ is the sine value of one emotion sub-code in the L-th group of emotion sub-codes, $\cos(2^{L-1}\pi E)$ is the cosine value of the other emotion sub-code in the L-th group of emotion sub-codes, and [x] is a matrix composed of x.

From the above formula, $P$ is a one-dimensional emotion code matrix, that is, an emotion code vector. In addition, as each group of emotion sub-code includes two emotion sub-codes, the emotion code length (the number of emotion codes contained in the emotion code vector) is twice the number of groups of emotion sub-code, i.e., 2L.

In the embodiments of the present disclosure, by encoding the target emotion information to vectorize or matricize the target emotion information, compared with using a single scalar defined target emotion information as input, an input dimension of the target emotion information is improved, which helps the generated digital human to more accurately express the emotion state indicated by the target emotion information.

In some embodiments of S13, the speech code matrix is usually a two-dimensional matrix, and a number of rows of the speech code matrix represents a time dimension of the matrix, which may specifically refer to a number of speech frames obtained after the input speech is framed at a preset frame rate, where each frame of speech has its own acquisition time. Each row of the speech code matrix includes several speech codes, and a number of speech codes included in each row may also be referred to as the speech code length.

Further, S13 may include: splicing each emotion code in the emotion code matrix to a preset position of each row of speech code in the speech code matrix to obtain the fusion matrix, where a time dimension of the speech code matrix remains unchanged.

Further, said splicing each emotion code in the emotion code matrix to a preset position of each row of speech code in the speech code matrix to obtain the fusion matrix is implemented based on a following formula:

$$P \in R^{2L},$$

$$v \in R^{t \times s},$$

$$v\% \in R^{t \times (s+2L)},$$

where $P$ is the emotion code matrix which is called an emotion code vector when having one-dimension, $2L$ is the emotion code length, i.e., a number of emotion codes included in the emotion code vector, $v$ is the speech code matrix, $v\%$ is the fusion matrix, $t$ is a number of rows of the speech code matrix, i.e., a time dimension of the speech code matrix, and $s$ is a length of each row of speech code in the speech code matrix, i.e., a number of speech codes included in each row of the speech code matrix.

In the above splicing method, the preset position may be, for example, a position after the last speech code of each row of speech code in the speech code matrix. Specifically, the position after the last speech code may be used as an access position, and then each emotion code in the emotion code matrix is inserted into the access position according to an original order of the emotion code.

For another example, the preset position may be a position before the first speech code of each row of speech code in the speech code matrix. Specifically, the position before the first speech code may be used as the access position, and then each emotion code in the emotion code matrix is inserted into the access position according to the original order of the emotion code.

In some embodiments, each emotion code in the emotion code matrix is spliced into each row of speech code by inserting the emotion codes as a string of codes as a whole. Therefore, complexity of matrix fusion may be reduced, errors in the splicing process may be reduced, and accuracy of matrix fusion may be improved.

In some embodiments, splicing each emotion code in the emotion code matrix into each row of speech code may include inserting the emotion codes into different positions in each row of speech code. Therefore, it is possible to avoid excessive differences in codes at different positions and improve equilibrium of the codes of the fusion matrix.

It should be noted that in the embodiments of the present disclosure, according to specific needs, other appropriate positions may be selected in each row of speech code in the speech code matrix as the access positions for splicing (i.e., the preset position), and other appropriate splicing methods may be selected.

It should be noted that in addition to the above-mentioned splicing methods for matrix fusion, in some embodiments, other appropriate matrix fusion methods may be used in combination with actual scenario requirements. For example, elements in two matrices are directly added and summed, or weighted summed, etc. The embodiments of the present disclosure do not limit the matrix fusion manner.

In some embodiments of S14, as an example, the digital human generation model may be a model based on NeRF, which may be represented by a Multi-Layer Perception (MLP) function of NeRF.

Specifically, a volume rendering method may be used to generate a digital human image, and specific steps may be as follows.

The fusion matrix $\tilde{v}\%$, a camera viewing angle $d$, and pixel position information $x$ are input into $MLP(\theta)$ based on a following formula:

$$MLP(\theta): \ (\tilde{v}, d, x) \ \rightarrow (c_\theta, \sigma_\theta),$$

where $MLP(\theta)$ is the MLP function used to indicate a model based on NeRF, $d$ is the camera viewing angle or a light direction, each pixel has its own light direction d, $c_\theta$ represents a color of the pixel in the light direction $d$, $\sigma_\theta$ is transparency of the pixel, $\theta$ is a parameter of the $MLP$ function, and $x$ is the position information of the pixel, usually a two-dimensional coordinate (a, b), $0 \leq a \leq A$, $0 \leq b \leq B$, where a, A, b, B are all positive integers.

To obtain a pixel value $C$ of light $r(w) = o + wd$ propagating at a camera center $o$ along the camera viewing angle $d$, the volume rendering method is used to determine pixel values at a near end distance $w_n$ and a far end distance $w_f$ based on a following formula:

$$C(r; \theta, \tilde{v}) = \int_{w_n}^{w_f} \sigma_\theta(r(w)) \times c_\theta(r(w), d) \times T(w) dw,$$

where $r(w)$ represents light, $w$ is a distance the light is emitted, d is the camera viewing angle or the light direction, $w_n$ is the near distance, $w_f$ is the far distance, $C(r; \theta, \tilde{v})$ is the pixel value of the pixel, T(w) is cumulative transparency of the light along a direction from $w_n$, to w, $T(w) = exp(\int_{w_n}^{w} -\sigma_\theta(r(z)) \times dz)$, $\theta$ is the parameter of the $MLP$ function, $c_\theta$ represents the color of the pixel in the light direction $d$, $\sigma_\theta$ is the transparency of the pixel, z is a distance the light is emitted in $T(w)$, and $r(z)$ represents the light in $T(w)$.

$\sigma_\theta$ and $c_\theta$ are values predicted by the MLP function based on the fusion matrix in combination with the camera viewing angle $d$ and the pixel position information $x$.

In this manner, all the pixels in the digital human image $I$ can be rendered by using the fusion matrix and the above volume rendering formula. A resolution of the digital human image is $A \times B$.

It should be noted that the digital human generation model may be other existing models, for example, a model based on GAN, which is not limited in the embodiments of the present disclosure.

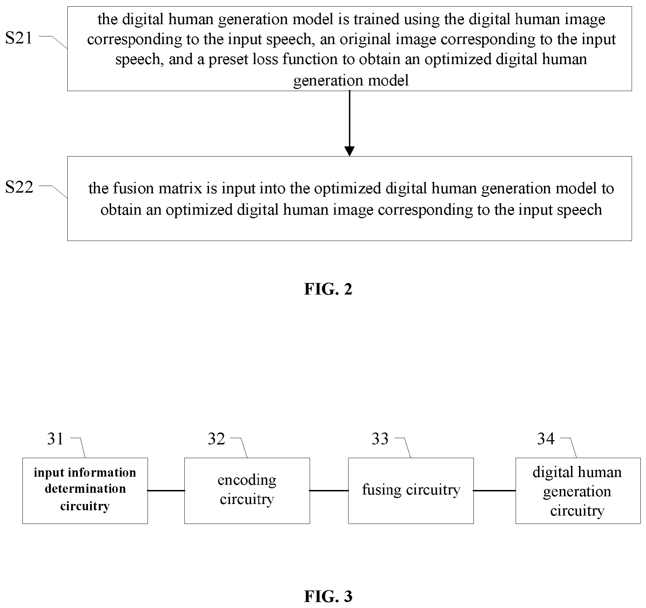

Referring to FIG. 2, FIG. 2 is a partial flow chart of a digital human generation method according to an embodiment. The digital human generation method may include S11 to S14 as shown in the embodiment of FIG. 1, and may further include S21 and S22 performed following S14. Each step is described below.

In S21, the digital human generation model is trained using the digital human image corresponding to the input speech, an original image corresponding to the input speech, and a preset loss function to obtain an optimized digital human generation model.

Specifically, a training data set may be constructed using the digital human image corresponding to the input speech and the original image corresponding to the input speech, and then the digital human generation model may be trained using the training data set and the preset loss function.

The original image corresponding to the input speech may be an image of the speaker captured by a camera when the speaker is expressing the input speech, or an image selected from a video of the speaker captured by the camera. It is understandable that the original image at least includes a body part (e.g., a facial area) that can reflect the speaker's emotion state, so that the digital human generation model can determine the emotion type of the speaker when expressing the input speech based on the original image.

Further, the emotion type indicated by the target emotion information is consistent with the emotion type contained in the input speech.

Further, the preset loss function is: $$L = \sum_{a=1}^{A} \sum_{b=1}^{B} \sum_{ch=1}^{3} P I_{g,ch}(a,b) - I_{ch}(a,b) P$$ , where $L$ is the loss function, $A$ is a number of pixels of the digital human image or the original image in a first direction, $B$ is a number of pixels of the digital human image or the original image in a second direction, $(a,b)$ is an intersectional pixel of the a-th row in the first direction and the b-th column in the second direction in the digital human image or the original image, $ch$ is a color channel of pixels, $I_{g,ch}(a,b)$ is a pixel value of an intersection of the a-th row in the first direction and the b-th column in the second direction in the original image on the channel $ch$, and $I_{ch}(a,b)$ is a pixel value of an intersection of the a-th row in the first direction and the b-th column in the second direction in the digital human image on the channel $ch$.

The first direction may be, for example, a horizontal coordinate direction of a two-dimensional space coordinate system where the digital human image or the original image is located, and the second direction may be, for example, a vertical coordinate direction of the two-dimensional space coordinate system where the digital human image or the original image is located.

In S22, the fusion matrix is input into the optimized digital human generation model to obtain an optimized digital human image corresponding to the input speech.

In the embodiment of the present disclosure, by constructing the training data set using the digital human image corresponding to the input speech and the original image, the digital human generation model is optimized, so that the digital human generation model can learn user's real emotions contained in the original image when the user expresses the input speech. Therefore, after inputting the fusion matrix into the optimized digital human generation model, a digital human that is more in line with the user's real emotion state is obtained, thereby enabling the digital human to convey the speaker's emotions and accordingly improving empathy of the digital human.

It could be understood that, compared with training the digital human generation model using a training data set constructed by other images (such as modeling images), training the digital human generation model using the training data set constructed by the original image corresponding to the input speech can achieve better training results, so that the digital human image output by the optimized digital human generation model is more in line with an actual situation.

Further, following obtaining the optimized digital human image corresponding to the input speech, the method further includes: splicing optimized digital human images corresponding to a plurality of input speeches together to obtain a digital human generation video.

Specifically, in practical applications, for each input speech, the digital human generation model can usually generate a corresponding frame of digital human image. To splice to obtain the digital human generated video, the digital human image corresponding to the input speech may be copied according to a duration of the input speech and a preset video frame rate (a number of copies is a ratio of the duration of the input speech to the video frame rate) to obtain multiple frames of digital human images corresponding to the input speech. The digital human images corresponding to the plurality of input speeches are spliced to obtain the digital human generation video.

By adopting the digital human generation solution provided in the embodiments of the present disclosure, a digital human with emotions can be generated, and the emotions of the digital human can be edited according to actual application needs, thereby realizing editability of the emotions of the digital human, so as to make improvement for existing techniques, meet needs of current practical scenarios, and enhance user experience.

For example, in a driving scenario, a user (e.g., a driver or a passenger) performs speech interaction with a vehicle-mounted terminal device. The vehicle-mounted terminal device senses the user's emotion state as "fatigue" from the user's input speech, and generates a serious digital human video to remind the user to pay attention to danger. For another example, in a smart medical service scenario, the terminal device senses the patient's emotion state as "worry", and generates a digital human video with a gentle expression to soothe the user's emotions.

In the embodiments, more details about S21 and S22 may be referred to the above text and the description in FIG. 1, which is not repeated here.

FIG. 3 is a block diagram of a digital human generation apparatus according to an embodiment.

The digital human generation apparatus includes: an input information determination circuitry 31 configured to determine input speech and target emotion information; an encoding circuitry 32 configured to encode the input speech to obtain a speech code matrix, and encode the target emotion information to obtain an emotion code matrix; a fusing circuitry 33 configured to fuse the speech code matrix and the emotion code matrix to obtain a fusion matrix; and a digital human generation circuitry 34 configured to input the fusion matrix into a digital human generation model to obtain a digital human image corresponding to the input speech.

More details of principles, specific implementation and advantages of the apparatus in the embodiment can be referred to related descriptions of the above methods as shown in FIG. 1 and FIG. 2, and are not repeated here.

In an embodiment of the present disclosure, a computer readable storage medium having a computer program stored therein is provided, where when the computer program is executed, steps of the above methods as shown in FIG. 1 and FIG. 2 are performed. In some embodiments, the storage medium may include a non-volatile or a non-transitory memory. In some embodiments, the storage medium may include an optical disk, a magnetic disk, or a solid disk.

In the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a Read-Only Memory (ROM), a Programmable ROM (PROM), an Erasable PROM (EPROM), an electrically Erasable EPROM (EEPROM), or a flash memory. The volatile memory may be a Random Access Memory (RAM) which functions as an external cache. By way of example but not limitation, various forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchronous connection to DRAM (SLDRAM), and Direct Rambus RAM (DR RAM).

In an embodiment of the present disclosure, a terminal including a memory and a processor is provided, where the memory has a computer program stored therein, and when the processor executes the computer program, steps of the above methods as shown in FIG. 1 and FIG. 2 are performed.

The terminal may include but is not limited to a mobile phone, a computer, or a tablet computer, and may alternatively be a server or a cloud platform.

It should be understood that the term "and/or" in the present disclosure is merely an association relationship describing associated objects, indicating that there can be three types of relationships, for example, A and/or B can represent "A exists only, both A and B exist, B exists only. In addition, the character "/" in the present disclosure represents that the former and latter associated objects have an "or" relationship.

The "plurality" in the embodiments of the present disclosure refers to two or more.

The descriptions of the first, second, etc. in the embodiments of the present disclosure are merely for illustrating and differentiating the objects, and do not represent the order or the particular limitation of the number of devices in the embodiments of the present disclosure, which do not constitute any limitation to the embodiments of the present disclosure.

It should be noted that sequence numbers of the steps in the embodiments do not limit an execution order of the steps.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

**Claims**

1. A digital human generation method, **characterized by** comprising:

   determining input speech and target emotion information;
   encoding the input speech to obtain a speech code matrix, and encoding the target emotion information to obtain an emotion code matrix;
   fusing the speech code matrix and the emotion code matrix to obtain a fusion matrix; and
   inputting the fusion matrix into a digital human generation model to obtain a digital human image corresponding to the input speech.

2. The method according to claim 1, wherein the target emotion information is preset, or is determined based on the input speech and an emotion prediction model.

3. The method according to claim 1, wherein following obtaining the digital human image corresponding to the input speech, the method further comprises:

> training the digital human generation model using the digital human image corresponding to the input speech, an original image corresponding to the input speech, and a preset loss function to obtain an optimized digital human generation model; and
> inputting the fusion matrix into the optimized digital human generation model to obtain an optimized digital human image corresponding to the input speech.

4. The method according to claim 2 or 3, wherein an emotion type indicated by the target emotion information is consistent with an emotion type contained in the input speech.

5. The method according to claim 3, wherein the preset loss function is:

$$L = \sum_{a=1}^{A}\sum_{b=1}^{B}\sum_{ch=1}^{3} \mathrm{P} I_{g,ch}(a,b) - I_{ch}(a,b)\,\mathrm{P},$$

where $L$ is the loss function, $A$ is a number of pixels of the digital human image or the original image in a first direction, $B$ is a number of pixels of the digital human image or the original image in a second direction, $(a,b)$ is an intersectional pixel of the a-th row in the first direction and the b-th column in the second direction in the digital human image or the original image, $ch$ is a color channel of pixels, $I_{g,ch}(a,b)$ is a pixel value of an intersection of the a-th row in the first direction and the b-th column in the second direction in the original image on the channel $ch$, and $I_{ch}(a,b)$ represents a pixel value of an intersection of the a-th row in the first direction and the b-th column in the second direction in the digital human image on the channel $ch$.

6. The method according to claim 3, wherein following obtaining the optimized digital human image corresponding to the input speech, the method further comprises:
splicing optimized digital human images corresponding to a plurality of input speeches together to obtain a digital human generation video.

7. The method according to claim 1, wherein said encoding the target emotion information to obtain the emotion code matrix comprises:

> pre-coding the target emotion information based on a preset emotion code length to obtain a plurality of groups of emotion sub-codes, wherein each of the plurality of groups of emotion sub-codes comprises two identical emotion sub-codes;
> for each of the plurality of groups of emotion sub-codes, determining a sine value of one emotion sub-code in the group and a cosine value of the other emotion sub-code in the group, to determine a plurality of emotion codes corresponding to the emotion sub-codes in the plurality of groups; and
> determining the emotion code matrix based on the plurality of emotion codes.

8. The method according to claim 7, wherein said for each of the plurality of groups of emotion sub-codes, determining the sine value of one emotion sub-code in the group and the cosine value of the other emotion sub-code in the group, to determine the plurality of emotion codes corresponding to the emotion sub-codes in the plurality of groups, and determining the emotion code matrix based on the plurality of emotion codes are implemented based on a following formula:

$$P = \left[\sin\left(2^{0}\pi E\right), \cos\left(2^{0}\pi E\right), \sin\left(2^{1}\pi E\right), \cos\left(2^{1}\pi E\right)\ldots, \sin\left(2^{L-1}\pi E\right), \cos\left(2^{L-1}\pi E\right)\right],$$

where $P$ is the emotion code matrix, $E$ is the target emotion information, $L$ is a number of the plurality groups of emotion sub-codes obtained by pre-coding, $2^{L-1}\pi E$ is an emotion sub-code in the L-th group of emotion sub-codes, $\sin(2^{L-1}\pi E)$ is the sine value of one emotion sub-code in the L-th group of emotion sub-codes, $\cos(2^{L-1}\pi E)$ is the cosine value of the other emotion sub-code in the L-th group of emotion sub-codes, and [x] is a matrix composed of x.

9. The method according to claim 1, wherein said fusing the speech code matrix and the emotion code matrix to obtain the fusion matrix comprises:

splicing each emotion code in the emotion code matrix to a preset position of each row of speech code in the speech code matrix to obtain the fusion matrix;
wherein a time dimension of the speech code matrix remains unchanged.

10. The method according to claim 9, wherein said splicing each emotion code in the emotion code matrix to a preset position of each row of speech code in the speech code matrix to obtain the fusion matrix is implemented based on a following formula:

$$P \in R^{2L},$$

$$v \in R^{t \times s},$$

$$v\% \in R^{t \times (s+2L)},$$

where $P$ is the emotion code matrix, $v$ is the speech code matrix, $v\%$ is the fusion matrix, $t$ is a number of rows of the speech code matrix, i.e., a time dimension of the speech code matrix, $s$ is a length of each row of speech code in the speech code matrix, and $2L$ is an emotion code length.

11. The method according to claim 1, wherein the digital human generation model is selected from a group consisting of: models based on Generative Adversarial Network (GAN), and models based on Neural Radiance Fields (NeRF).

12. A digital human generation apparatus, **characterized by** comprising:

an input information determination circuitry configured to determine input speech and target emotion information;
an encoding circuitry configured to encode the input speech to obtain a speech code matrix, and encode the target emotion information to obtain an emotion code matrix;
a fusing circuitry configured to fuse the speech code matrix and the emotion code matrix to obtain a fusion matrix; and
a digital human generation circuitry configured to input the fusion matrix into a digital human generation model to obtain a digital human image corresponding to the input speech.

13. A computer readable storage medium having a computer program stored thereon, **characterized in that** when the computer program is executed by a processor, the digital human generation method according to any one of claims 1 to 11 is performed.

14. A terminal comprising a memory and a processor, **characterized in that** the memory stores a computer program that can run on the processor, and when the processor executes the computer program, the digital human generation method according to any one of claims 1 to 11 is performed.

S11 — input speech and target emotion information are determined

S12 — the input speech is encoded to obtain a speech code matrix, and the target emotion information is encoded to obtain an emotion code matrix

S13 — the speech code matrix and the emotion code matrix are fused to obtain a fusion matrix

S14 — the fusion matrix is input into a digital human generation model to obtain a digital human image corresponding to the input speech

**FIG. 1**

| S21 | the digital human generation model is trained using the digital human image corresponding to the input speech, an original image corresponding to the input speech, and a preset loss function to obtain an optimized digital human generation model |
|---|---|

| S22 | the fusion matrix is input into the optimized digital human generation model to obtain an optimized digital human image corresponding to the input speech |
|---|---|

**FIG. 2**

| 31 | | 32 | | 33 | | 34 |
|---|---|---|---|---|---|---|
| input information determination circuitry | — | encoding circuitry | — | fusing circuitry | — | digital human generation circuitry |

**FIG. 3**

## INTERNATIONAL SEARCH REPORT

| International application No. |
| --- |
| **PCT/CN2023/083559** |

**A. CLASSIFICATION OF SUBJECT MATTER**

G06T 13/20(2011.01)i; G10L 25/57(2013.01)i; G06T 13/40(2011.01)i; G06T 3/40(2006.01)i

According to International Patent Classification (IPC) or to both national classification and IPC

**B. FIELDS SEARCHED**

Minimum documentation searched (classification system followed by classification symbols)

IPC:G06T,G10L

Documentation searched other than minimum documentation to the extent that such documents are included in the fields searched

Electronic data base consulted during the international search (name of data base and, where practicable, search terms used)

CNTXT, CNABS, CNKI, ENTXT: 数字人, 情绪, 融合, 结合, 训练, 损失函数, 图, 语音, 编码, 矩阵, digital human, speech, encoding, matrix, emotion, fusion, image, voice

**C. DOCUMENTS CONSIDERED TO BE RELEVANT**

| Category* | Citation of document, with indication, where appropriate, of the relevant passages | Relevant to claim No. |
| --- | --- | --- |
| Y | CN 113822967 A (BEIJING WODONG TIANJUN INFORMATION TECHNOLOGY CO., LTD. et al.) 21 December 2021 (2021-12-21)<br>description, paragraphs [0032]-[0118], and figures 1-6 | 1-4, 6, 11-14 |
| Y | CN 115330913 A (GUANGZHOU QUWAN NETWORK TECHNOLOGY CO., LTD.) 11 November 2022 (2022-11-11)<br>description, paragraphs [0020]-[0064], and figures 1-3 | 1-4, 6, 11-14 |
| A | CN 112989935 A (BEIJING BAIDU NETCOM SCIENCE AND TECHNOLOGY CO., LTD.) 18 June 2021 (2021-06-18)<br>entire document | 1-14 |
| A | CN 114005468 A (UNIDT (SHANGHAI) CO., LTD. et al.) 01 February 2022 (2022-02-01)<br>entire document | 1-14 |
| A | US 2019172243 A1 (AFFECTIVA INC.) 06 June 2019 (2019-06-06)<br>entire document | 1-14 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 October 2023** | **20 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/083559** |

| Patent document cited in search report | | | Publication date (day/month/year) | Patent family member(s) | | | Publication date (day/month/year) |
| --- | --- | --- | --- | --- | --- | --- | --- |
| CN | 113822967 | A | 21 December 2021 | None | | | |
| CN | 115330913 | A | 11 November 2022 | None | | | |
| CN | 112989935 | A | 18 June 2021 | None | | | |
| CN | 114005468 | A | 01 February 2022 | None | | | |
| US | 2019172243 | A1 | 06 June 2019 | US | 10628985 | B2 | 21 April 2020 |
| | | | | US | 2019172458 | A1 | 06 June 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310135294